# EUROPEAN PATENT APPLICATION

(11) **EP 1 992 238 A2**
(43) Date of publication of application: **19.11.2008**
(21) Application number: 08251563.6
(22) Date of filing: 29.04.2008
(51) Int. Cl.: A23N 17/00, A23K 1/14, A23K 1/18

(54) **Feeding horses**

(30) Priority: 12.05.2007 GB 0709186
(71) Applicant: Cogger, Clifford Frank, Otterton Budleigh Salterton Devon EX9 7HB (GB)
(72) Inventor: Cogger, Clifford Frank, Otterton Budleigh Salterton Devon EX9 7HB (GB)
(74) Representative: Brown, Michael Stanley

(57) **Abstract**

A method of preparing hay for feeding to a horse includes placing the hay within the upper compartment of a vessel containing a mesh grid that divides the interior of the vessel into upper and lower compartments, and introducing steam into the lower compartment by means of an atomiser containing a plurality of fins.

## Description

### Field of the Invention

This invention relates to the feeding of horses and is specifically concerned with the provision of improved means for preparing a horse's feed.

In British Patent Specification No. 2 374 513 there is described means for preparing a horse's feed comprising a vessel having a lid which can be opened to enable hay to be placed in and removed from the vessel. A steam generator is connected to the vessel so that steam passes into the vessel and hay contained within the vessel on top of a mesh grid is subjected to the action of the steam. After the hay has been treated with steam, it is removed from the vessel and given to the horse.

The interior of the vessel is thus divided by the mesh grid into two compartments, i.e. a lower compartment into which the steam is introduced, and an upper compartment into which the hay is placed and from which the hay is removed after treatment.

It is an object of the present invention to provide an improved means for preparing a horse's feed.

It is also an object of the present invention to provide an improved method of preparing a horse's feed.

### Summary of the Invention

According to a first aspect of the present invention there is provided means for preparing a horse's feed comprising a vessel containing a mesh grid that divides the interior of the vessel into upper and lower compartments, i.e. an upper compartment into which hay can be placed and a lower compartment into which steam is introduced, characterised in that the steam is introduced into the lower compartment by means of an atomiser containing a plurality of fins.

According to a second aspect of the present invention there is provided a method of preparing hay for feeding to a horse, which method includes placing the hay within the upper compartment of a vessel containing a mesh grid that divides the interior of the vessel into upper and lower compartments, and introducing steam into the lower compartment by means of an atomiser containing a plurality of fins.

The atomiser is preferably connected to a steam jet nozzle to which steam is supplied from a steam generator.

The design of the atomiser and the arrangement of the fins within the atomiser are preferably such as to create a vortex action promoting the circulation of water droplets within the lower compartment to the upper compartment.

The vortex action created by the atomiser is such as to provide for an improved distribution of the steam throughout the hay therefore ensuring effective steam impregnation of all of the hay. This thus provides for more effective elimination of bacteria, fungal spores and dust mites. It also reduces steaming times by enabling higher temperatures to be obtained in the upper compartment. It also ensures that the nutritional value of the hay is more effectively maintained.

### Brief Description of the Drawings

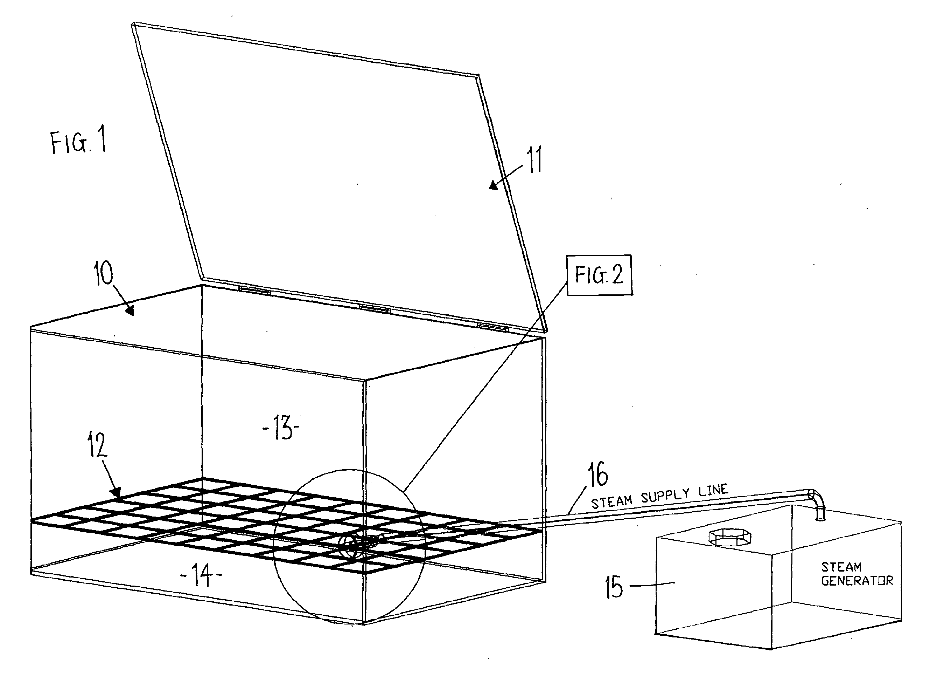

Figure 1 is a perspective view of a vessel within the upper compartment of which hay can be placed and subjected to steam treatment,
Figure 2 is an enlarged schematic view illustrating the mode of action of the steam atomiser,
Figure 3 shows the arrangement of the fins within the atomiser,

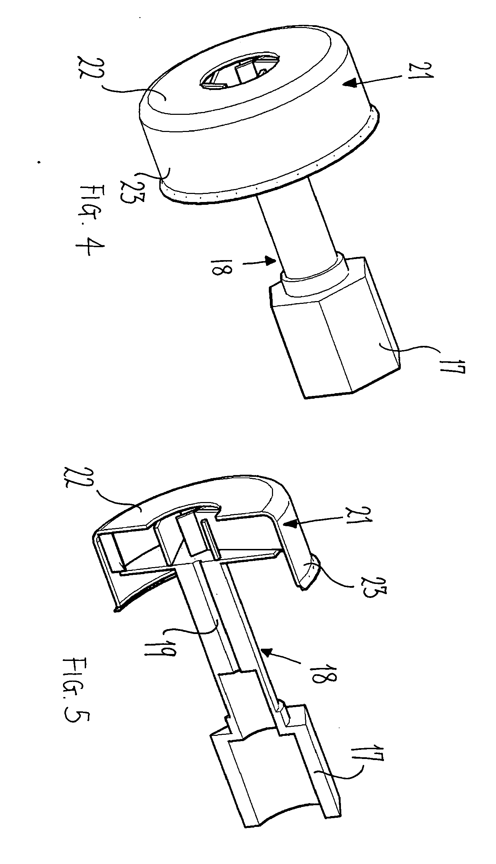

Figure 4 is a perspective view of the atomiser, and
Figure 5 is a sectional view of the atomiser.

### Description of the Preferred Embodiment

The hay treatment means shown in the drawings comprises a rectangular vessel 10 having a lid 11 that can be opened to allow hay to be placed within, and removed from, the interior of the vessel 10. There is a wire mesh grid 12 within the vessel 10 and the wire mesh grid 12 divides the interior of the vessel 10 into two compartments, namely an upper compartment 13 into which the hay is placed and a lower compartment 14 into which steam is introduced. The steam is supplied to the lower compartment 14 from a steam generator 15 via a steam supply line 16.

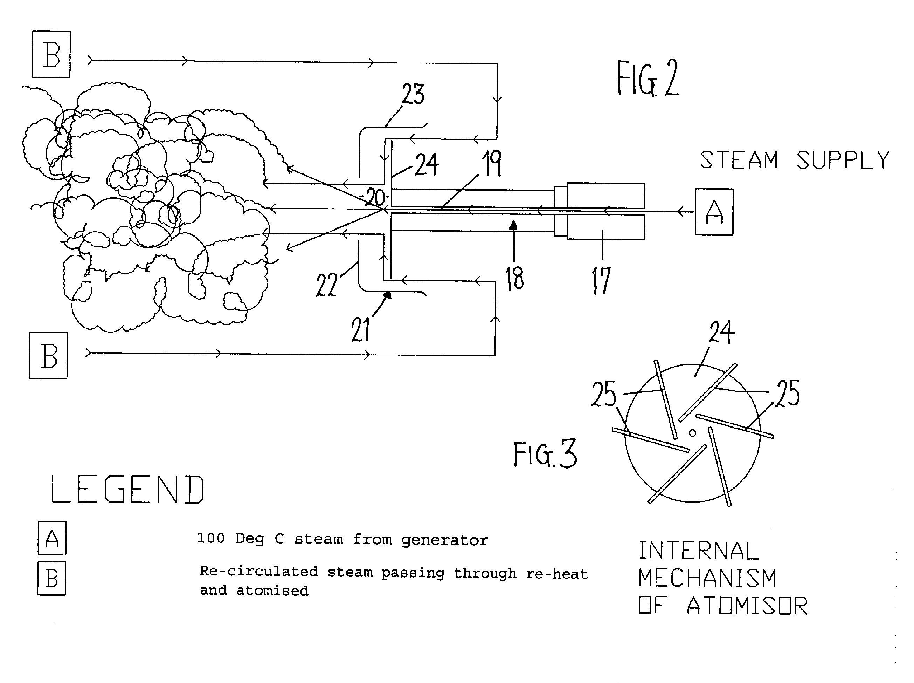

The supply line 16 is connected to an inlet connector 17 of an atomiser 18 and passes through an elongated passage 19 into a chamber 20 contained within a cover 21 comprising an annular portion 22 and a skirt portion 23. The base of the chamber 20 is afforded by a circular plate 24 that extends at right angles to the axis of the elongated passage 19. There are a plurality of obliquely extending fins 25 within the chamber 20 and these are positioned as shown in Figure 3.

The steam from the steam generator 15 passes along the passage 19 and passes into and through the chamber 20 issuing into the lower compartment 14 in the form of a jet. The chamber 20 thus acts as a nozzle and steam within the lower compartment 14 is drawn into the chamber 20 through the annular space between the edge of the skirt portion 23 and the edge of the circular plate 23. The action of the fins 25 is such that a vortex action is obtained and this ensures effective mixing of the steam and water droplets within the chamber 20 and reduces the size of the water droplets and re-heats the steam from the steam newly introduced into the chamber. At the same time, an even distribution of steam within the lower compartment 14 is obtained.

The continuous supply of steam into the lower compartment 14 results in the evenly distributed steam and finely divided water droplets rising upwardly through the openings in the grid 12 into the upper compartment 13. As the steam rises upwardly through the upper compartment 13, the hay within the upper compartment is subjected to the action of the steam resulting in effective elimination of bacteria, fungal spores and dust mites from the high without significantly affecting the nutritional value of the hay.

The hay thus treated is particularly suitable for feeding to horses suffering from chronic obstructive pulmonary disease or heaves or who have respiratory problems.

## Claims

1. Means for preparing a horse's feed comprising a vessel containing a mesh grid that divides the interior of the vessel into upper and lower compartments, i.e. an upper compartment into which hay can be placed and a lower compartment into which steam is introduced, **characterised in that** the steam is introduced into the lower compartment by means of an atomiser containing a plurality of fins.

2. Preparation means as claimed in Claim 1, in which the atomiser is connected to a steam jet nozzle to which steam is supplied from a steam generator.

3. Preparation means as claimed in Claim 1, in which the design of the atomiser and the arrangement of the fins within the atomiser are such as to create a vortex action promoting the circulation of water droplets within the lower compartment to the upper compartment.

4. A method of preparing hay for feeding to a horse, which method includes placing the hay within the upper compartment of a vessel containing a mesh grid that divides the interior of the vessel into upper and lower compartments, and introducing steam into the lower compartment by means of an atomiser containing a plurality of fins.

5. A method as claimed in Claim 4, in which the atomiser is connected to a steam jet nozzle to which steam is supplied from a steam generator.

6. A method as claimed in Claim 4, in which the design of the atomiser and the arrangement of the fins within the atomiser are such as to create a vortex action promoting the circulation of water droplets within the lower compartment to the upper compartment.
